# EUROPEAN PATENT APPLICATION

(11) **EP 2 061 223 A1**
(43) Date of publication of application: **20.05.2009**
(21) Application number: 07120545.4
(22) Date of filing: 13.11.2007
(51) Int. Cl.: H04M 3/42

(54) **Roaming in telecommunication networks**

(71) Applicant: Nederlandse Organisatie voor toegepast-natuurwetenschappelijk onderzoek TNO, 2628 VK Delft (NL)
(72) Inventor: Dietz, Jan Berend, 2803 WN Gouda (NL)
(74) Representative: Hatzmann, Martin

(57) **Abstract**

A method of providing telecommunication services in next generation networks involves at least one landline terminal (3). The terminal (3) has a home network (1) and is capable of registering in another network (2) so as to be used in the other network while charging telecommunication costs to the home network. Advantageously, the home network (1) is a private network, for example a next generation corporate network, while the other network (2) is a public network. An interface (4) between the home network (1) and the other network (2) may be constituted by a network-network interface.

## Description

The present invention relates to roaming in telecommunication networks. More in particular, the present invention relates to a method of and a system for providing telecommunication services using a terminal in another telecommunication network than its own home network, which other telecommunication network preferably is a next generation network.

It is well known to provide the feature known as "roaming" in mobile (cellular) communication networks. Roaming allows a mobile terminal to register in another network than its home network and to use the facilities of the other (visited) network while typically charging any calls to its home network. Traditionally, roaming has been limited to mobile networks only.

European Patent Application EP 1 819 178 discloses a method of implementing terminal roaming in a soft-switch based next generation network (NGN) and suggests that this network is a fixed or landline (that is, not mobile) network. A terminal registers at a so-called soft switch controlling device of another network than its home network. On the basis of the terminal's user data the soft switching device determines that the terminal is visiting, checks its roaming rights, allows access to the network, and handles charges. The home network of the terminal is a public network while the other (visited) network may be a public or private network. In case the visited network is a private network, EP 1 819 178 suggests using a traversing device for different form networks.

The advantages of roaming are clear: the subscribers of a first network can visit a second network and use their terminals in the second network without having to pay charges directly to the operator of the second network. Typically, facilities available at the first network (the subscribers' home network) are also available at the second network (the visited network). In Prior Art systems these subscribers are necessarily subscribers of public networks managed by a operator who, in principle, allows any paying subscriber access to his network. There are, however, also non-public networks, that is private networks, having restricted access. In private networks, access to the network may be limited to employees of a certain company, students of a certain universities, and similar closed groups.

It is an object of the present invention to overcome these and other problems of the Prior Art and to provide a method of providing telecommunication services in next generation networks using at least one landline terminal, which method is not limited to subscribers of public networks.

It is another object of the present invention to provide a system for providing telecommunication services in next generation networks using at least one landline terminal, which system is not limited to subscribers of public networks.

Accordingly, the present invention provides a method of providing telecommunication services in next generation networks using at least one landline terminal, the method comprising the steps of:
assigning a home network to the terminal,
registering the terminal in another network, and
using the terminal in the other network while charging telecommunication costs to the home network,
wherein the home network is a private network.
By allowing the other or "host" network to charge the telecommunication costs to a private "home" network, subscribers of private networks can also roam, similar to subscribers of public networks. This offers subscribers of private networks an increased degree of freedom. Employees of a company that has a private network will be able to use their terminals both at their home location, for example the company's head office, and at other locations, for example at branch offices using the local private networks or at other locations outside the head office using the public network.

It will be understood that a landline or fixed terminal is contrasted with a mobile or cellular terminal. Although the landline terminal may have wireless access to a network (e.g. using a Bluetooth© or other wireless connection), it still has access to a fixed network, in contrast with a mobile network which includes antenna masts and terminals capable of wirelessly communicating with the antenna masts.

When registered in another network, the terminal may not only be able to charge telecommunication costs to the home network but may also be able to use facilities of the home network, such as abbreviated dialling (company number plan). More in particular, the step of using the terminal in the other network may further involve providing facilities of the home network, while the facilities of the home network may comprise abbreviated dialling and/or voice mail. This further increases the benefits of the terminal users.

In a preferred embodiment, the home network is a next generation corporate network (NGCN).

In one embodiment, the other (or visited) network is a public network, while in another embodiment, the other network is a private network. In further embodiments, a plurality of other networks may be used, some of which may be public and some of which may be private.

Between networks interfaces are typically used to facilitate the data transfer between the networks. In accordance with the present invention, an interface between the home network and the other network preferably is a network-network interface (NNI). In the Prior Art, the interface used between a private and a public network is a user-network interface (UNI) which assumes that the private network is just a subscriber of the public network and not another network having its own subscribers. In the present invention, in contrast, the network-network interface (NNI) assumes that both the private network and the public network are service providers.

The charging of telecommunication costs to the home network is preferably carried out under a roaming agreement, as in typical mobile telecommunication systems.

The present invention additionally provides a system for providing telecommunication services using at least one landline terminal, the system comprising

a home network assigned to the terminal, and
another network in which the terminal is capable of registering so as to be used in the other network while charging telecommunication costs to the home network,
wherein at least one of the home network and the other network is a next generation network, and
wherein the home network is a private network.
The system of the present invention provides the same advantages as the method defined above.

In a preferred embodiment of the system according to the present invention, using the terminal in the other network further involves providing facilities of the home network. An interface between the home network and the other network may be a network-network interface, while the other network may be a public network.

The present invention will further be explained below with reference to exemplary embodiments illustrated in the accompanying drawings, in which:
Fig. 1 schematically shows a first embodiment of a telecommunication system according to the present invention.
Fig. 2 schematically shows a second embodiment of a telecommunication system according to the present invention.

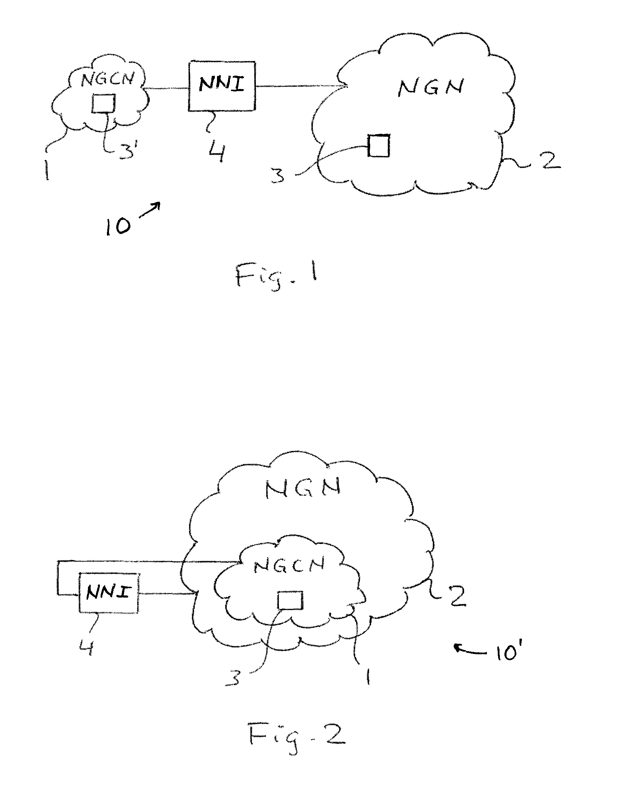

The telecommunication system 10 shown merely by way of non-limiting example in Fig. 1 comprises a first (or home) network 1, an second (or other) network 2, landline terminals 3 and 3', and an interface unit 4.

For both terminals, the first network 1 is their home network: the terminals can be used within the first network 1 without the need for any additional measures, and any telecommunication charges incurred by the terminals will be incurred by the operator of the first network. Typically, the users of the terminals will have subscription provided by the operator of the first network.

In accordance with the present invention, the home network 1 is a private network, such as a company network. The home network 1 can be constituted by e.g. a local area network (LAN) or an IP-based voice network (IP-PBX), in particular a next generation corporate network (NGCN). In addition, the terminals are able to roam: they can register in other networks, such as the second network 2, and use telecommunication facilities offered by the second network 2. In some embodiments, the second network 2 will offer only some facilities, for example only voice calls, while in other embodiments the second network 2 will offer full facilities to visiting (that is, roaming) terminals.

Facilities offered by the home network 1 and, in the case of roaming, possibly also by the second network 2 may include abbreviated dialling, call forwarding, and similar services.

In the example of Fig. 1, the terminal 3 is registered in the second network 2. In this particular example, the second network 2 is a next generation network (NGN). The terminal 3 is a landline terminal which may register in the second network 2 by requesting an IP address when physically present in the service area of the second network. The terminal 3 may make a physical connection with the second network by using a suitable connector, or may make a wireless connection using a Bluetooth© or other wireless link. In either case, a landline connection will be established.

Although the terminals 3 and 3' are called landline terminals, that is, terminals suitable for use in landline (fixed) networks such as PSTN (Public Switched Telephone Network), they may additionally be suitable for use in mobile (cellular) networks, such GSM (Groupe Spéciale Mobile) and UMTS (Universal Mobile Telecommunication System) networks. However, the present invention is directed at their landline telecommunication features, not at their mobile features.

It will be clear from Fig. 1 that the service areas of the two network have no overlap and that, at the location of terminal 3, the first network 1 is inaccessible. In contrast, the terminal 3' is located within the service area of the first network 1 and is capable of registering in the first network 1. Terminal 3, when registered in the second network 2, will then be able to communicate with terminal 3' when the latter is registered in its home network 1. Terminal 3 will also be able to communicate with other terminals (not shown) in network 1, network 2 or other networks (not shown). Any charges incurred by terminal 3 when registered in the second network 2 are in the preferred embodiment borne by the operator of the first network 1.

It will be clear that the terminal 3 can de-register in the second network 2 and thereby give up its local telecommunication facilities. The terminal 3 may move back to its home network 1, or move on to a further network (not shown).

The first network 1 and the second network 2 are coupled through an interface unit 4. Conventionally, the interface between a private network (such as network 1) and a public network (such as network 2) is constituted by a User Network Interface (UNI), which is a demarcation point between the responsibility of the service provider and the responsibility of the subscriber. However, according to a further aspect of the present invention another type of interface is preferably used: a Network-Network Interface (NNI) that defines a demarcation point between provider networks. Accordingly, in preferred embodiments of the present invention the private network 1 is treated as a provider network, as distinct from a subscriber network. By treating private networks as provider networks, roaming of landline terminals in public networks, or in other private networks, is greatly facilitated.

In the merely exemplary embodiment of Fig. 2, the service area of the first network 1 is also by the second network 2. In this case of complete overlap, the present invention can also be utilized.

The second network 2 may offer the same telecommunication facilities as the first network 1, but may also offer other facilities, possibly additional facilities which are not provided by the first network.

As in the embodiment of Fig.1, the first and second networks of Fig. 2 are coupled through an interface 4, which preferably is a network-network interface (NNI).

Although only two networks are shown in Figs. 1 and 2, it will be clear that the present invention is not so limited and that more than two networks may be involved in the roaming of the terminals. The terminals of the first network 1 may roam in two or more other networks, some of which may be overlapping.

The present invention is based upon the insight that a private network can also be used as a service provider whose clients roam in other networks. The present invention benefits from the further insight that roaming is not only possible in mobile networks but also in landline networks.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents. Neither the home network nor the other, visited network, needs to be a next generation network, although such networks are used in the preferred embodiments.

It will therefore be understood by those skilled in the art that the present invention is not limited to the embodiments illustrated above and that many modifications and additions may be made without departing from the scope of the invention as defined in the appending claims.

## Claims

1. A method of providing telecommunication services in next generation networks using at least one landline terminal (3), the method comprising the steps of:
assigning a home network (1) to the terminal (3),
registering the terminal in another network (2), and
using the terminal in the other network (2) while charging telecommunication costs to the home network (1),
wherein the home network (1) is a private network.

2. The method according to claim 1, wherein the step of using the terminal (3) in the other network (2) further involves providing facilities of the home network (1).

3. The method according to claim 2, wherein the facilities of the home network (1) comprise abbreviated dialling and/or using voice mail.

4. The method according to any of the preceding claims, wherein the home network (1) is a next generation corporate network.

5. The method according to any of the preceding claims, wherein the other network (2) is a public network.

6. The method according to any of claims 1 to 4, wherein the other network (2) is a private network.

7. The method according to any of the preceding claims, wherein an interface (4) between the home network (1) and the other network (2) is a network-network interface.

8. The method according to any of the preceding claims, wherein the charging of telecommunication costs to the home network (1) is carried out under a roaming agreement.

9. A system (10) for providing telecommunication services using at least one landline terminal (3), the system comprising
a home network (1) assigned to the terminal, and
another network (2) in which the terminal is capable of registering so as to be used in the other network while charging telecommunication costs to the home network,
wherein at least one of the home network (1) and the other network (2) is a next generation network, and
wherein the home network (1) is a private network.

10. The system according to claim 9, wherein an interface (4) between the home network (1) and the other network (2) is a network-network interface, and wherein the other network (2) preferably is a public network.
